# EUROPEAN PATENT APPLICATION

(11) **EP 4 668 428 A1**
(43) Date of publication of application: **24.12.2025**
(21) Application number: 24849367.8
(22) Date of filing: 20.06.2024
(51) Int. Cl.: H01M 50/183, H01M 50/184, H01M 50/19, H01M 50/105, H01M 10/04

(54) **SECONDARY BATTERY AND METHOD FOR MANUFACTURING SECONDARY BATTERY**

(30) Priority: 28.07.2023 KR 20230099212
(71) Applicant: LG Energy Solution, Ltd., Seoul 07335 (KR)
(72) Inventor: HAN, Hyun Gyu, Daejeon 34122 (KR)
(74) Representative: Plasseraud IP
(86) International application number: PCT/KR2024/008522
(87) International publication number: WO 2025/028796

(57) **Abstract**

A secondary battery according to an embodiment of the present disclosure may include a pouch-type case having an opening between a pair of case units, an electrode assembly inserted into the case through the opening, and a sealing member provided to cover the opening and seal the case.

## Description

### TECHNICAL FIELD

### CROSS-REFERENCE TO RELATED APPLICATION

The present application claims priority to Korean Patent Application No. 10-2023-0099212 filed on July 28, 2023 in the Republic of Korea, the disclosures of which are incorporated herein by reference.

### TECHNICAL FIELD

The present disclosure relates to a secondary battery and a manufacturing method of the secondary battery.

### BACKGROUND ART

In order to solve the problems of accelerating environmental pollution and energy sources due to the depletion of petroleum resources, research and development on power generation based on eco-friendly energy sources are in progress. In particular, research on secondary batteries is being actively conducted, and various aspects such as materials, structures, processes, and stability of secondary batteries are being studied.

The internal electrode assembly of the secondary battery may be surrounded by a case. The case may have various types of cases including a pouch-type case. In the case of a pouch-type case, a process of forming a flat pouch sheet for allowing the electrode assembly to be embedded may be performed.

According to the prior art, since the pouch-type case has a structure in which a plurality of layers are stacked, there is a limit to elongation by pressing and heating, so there is a limit to the thickness or size in manufacturing the secondary battery or case. When the manufacturing of the secondary battery or case is limited in the process step, it may be difficult to improve the energy density of the secondary battery, and there may be limitations in performance.

### SUMMARY

### TECHNICAL PROBLEM

The present disclosure is designed to solve the problems of the related art, and therefore the present disclosure is directed to providing a secondary battery and a manufacturing method of the secondary battery capable of efficient production while increasing energy density by improving limitations in manufacturing the secondary battery or case.

### TECHNICAL SOLUTION

A secondary battery according to an embodiment of the present disclosure may include a pouch-type case having an opening between a pair of case units, an electrode assembly inserted into the case through the opening, and a sealing member provided to cover the opening and seal the case.

A manufacturing method of the secondary battery according to an embodiment of the present disclosure may include preparing a case sheet provided with a recessed portion recessed to a predetermined depth, forming case units by cutting the case sheet, and forming a secondary battery having an electrode assembly embedded therein using the case units.

### ADVANTAGEOUS EFFECTS

According to a preferred embodiment of the present disclosure, the numerical limitations in manufacturing the secondary battery or case may be improved.

According to a preferred embodiment of the present disclosure, the energy density of the secondary battery may be improved.

### BRIEF DESCRIPTION OF THE DRAWINGS

FIG. 1 is a schematic view showing a case sheet according to a first embodiment of the present disclosure.
FIG. 2 is a side view showing a case sheet according to a first embodiment of the present disclosure, as viewed from one direction.
FIG. 3 is a perspective view showing a pouch-type case according to a first embodiment of the present disclosure.
FIG. 4 is a side view showing a pouch-type case according to a first embodiment of the present disclosure, as viewed from one direction.
FIG. 5 is a plan view showing a secondary battery according to a first embodiment of the present disclosure.
FIG. 6 is a side view showing a secondary battery according to a first embodiment of the present disclosure, as viewed from another direction.
FIG. 7 is a side view showing a secondary battery sealed with a sealing member according to a first embodiment of the present disclosure, as viewed from one direction.
FIG. 8 is a perspective view showing a pouch-type case according to a second embodiment of the present disclosure.
FIG. 9 is a side view showing a pouch-type case according to a second embodiment of the present disclosure, as viewed from one direction.
FIG. 10 is a plan view showing a secondary battery according to a second embodiment of the present disclosure.
FIG. 11 is a side view showing a secondary battery according to a second embodiment of the present disclosure, as viewed from another direction.
FIG. 12 is a side view showing a secondary battery sealed with a sealing member according to a second embodiment of the present disclosure, as viewed from one direction.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

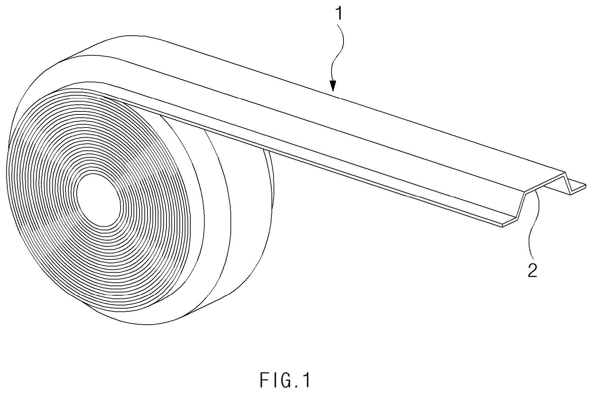

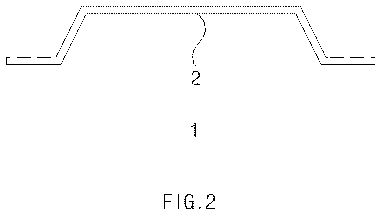

FIG. 1 is a schematic view showing a case sheet according to a first embodiment of the present disclosure, and FIG. 2 is a side view showing a case sheet according to a first embodiment of the present disclosure, as viewed from one direction.

The case sheet 1 may form a case 10 that forms the exterior of the secondary battery 100 to be described later.

The case sheet 1 may have a recessed portion 2 formed therein. The recessed portion 2 may be formed to be recessed to a predetermined depth. The recessed depth of the recessed portion 2 may be determined according to the size of the electrode assembly 60 to be disposed inside the secondary battery 100.

The case sheet 1 may be cut to form a pair of case units 11, 12 in which the recessed portion 2 is formed. However, the present disclosure is not limited thereto, and only at least one of the pair of case units may have the recessed portion 2 recessed to a predetermined depth, and the other may have a flat surface formed therein.

The case sheet 1 may be prepared in a rolled form to be supplied to a manufacturing process of the secondary battery, but is not limited thereto.

The manufacturing method of the secondary battery 100 may include a preparation step of preparing the case sheet 1.

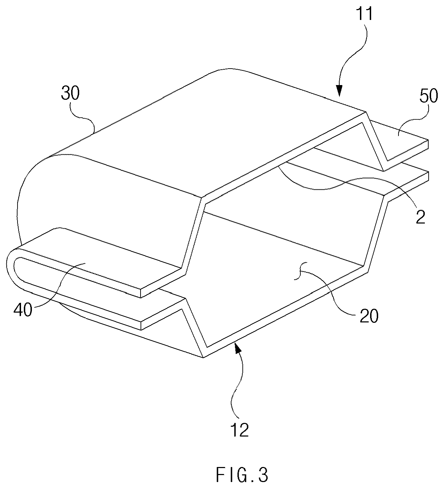

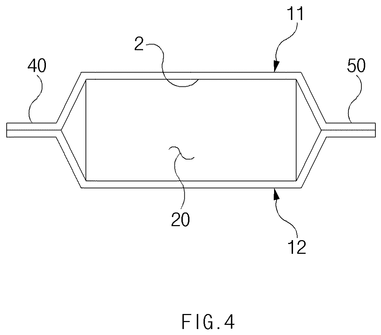

FIG. 3 is a perspective view showing a pouch-type case according to a first embodiment of the present disclosure, and FIG. 4 is a side view showing a pouch-type case according to a first embodiment of the present disclosure, as viewed from one direction. The description of the above-described embodiment may be equally or similarly applied to this embodiment.

The manufacturing method of the secondary battery 100 may include a unit forming step.

The unit forming step may be a step of cutting the case sheet 1 to form the case units 11, 12. For example, the case sheet 1 may be cut to form a first case unit 11 and a second case unit 12. The first case unit 11 and the second case unit 12 may be connected through the connection portion 30, but are not limited thereto and may also be separated in some embodiments.

The manufacturing method of the secondary battery 100 may include a secondary battery forming step.

The secondary battery forming step may be a step of forming the secondary battery 100 having the electrode assembly 60 embedded therein using the case units 11, 12.

The secondary battery forming step may include a step of disposing the case units 11, 12 to be overlapped so that the opening 20 is formed. The case units 11, 12 may be overlapped to form the case 10.

The case 10 may include a pair of case units 11, 12. For example, the case 10 may include a first case unit 11 and a second case unit 12. The first case unit 11 and the second case unit 12 may be overlapped to face each other.

The case 10 may include a connection portion 30. For example, the connection portion 30 may be folded and may connect the pair of case units 11, 12.

The pair of case units 11, 12 may be overlapped to face each other, so that the opening 20 may be formed on one side of the case 10. For example, when the connection portion 30 is folded and the first case unit 11 and the second case unit 12 face each other, the recessed portion 2 provided in each of the first case unit 11 and the second case unit 12 may form the opening 20.

The opening 20 may have a polygonal shape. For example, the recessed portion 2 formed in the case sheet 1 may have a cross-section recessed in a polygonal (e.g., rectangular, trapezoidal) shape. When the first case unit 11 and the second case unit 12 are overlapped to face each other, the opening 20 having a polygonal shape may be formed by the recessed portion 2 formed in at least one of the first case unit 11 and the second case unit 12.

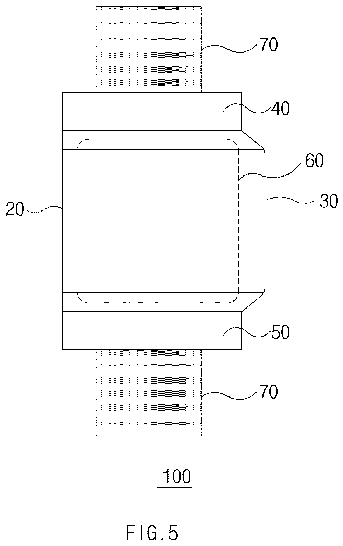

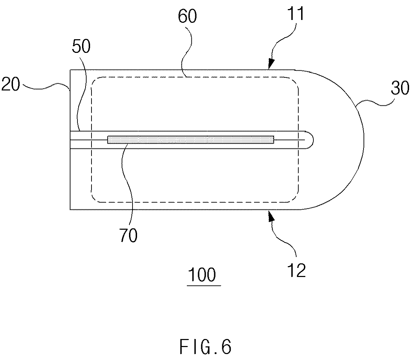

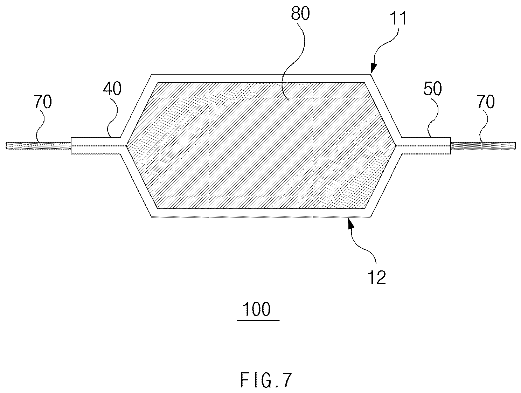

FIG. 5 is a plan view showing a secondary battery according to a first embodiment of the present disclosure, FIG. 6 is a side view showing a secondary battery according to a first embodiment of the present disclosure, as viewed from another direction, and FIG. 7 is a side view showing a secondary battery sealed with a sealing member according to a first embodiment of the present disclosure, as viewed from one direction. The description of the above-described embodiment may be equally or similarly applied to this embodiment.

The secondary battery forming step may include a step of disposing the electrode assembly 60. For example, the secondary battery forming step may include a step of inserting the electrode assembly 60 between the case units 11, 12 through the opening 20.

The secondary battery forming step may include a sealing step. For example, the sealing step may be a step of sealing the opening 20 using the sealing member 80.

The secondary battery 100 may include a pouch-type case 10 having an opening 20 between a pair of case units 11, 12, an electrode assembly 60 inserted into the case 10 through the opening 20, and a sealing member 80 provided to cover the opening 20 and seal the case 10.

The sealing member 80 may include a metal member. The sealing member 80 may be a metal member having a cooling effect. The shape of the sealing member 80 may correspond to the shape of the opening 20. For example, the metal member 80 may have a shape corresponding to the shape of the opening 20 so that it may be inserted into the opening 20 to seal the case 10. However, the above-described shape of the metal member 80 is an example and is not limited thereto.

When the sealing member 80 is formed of a metal member having a cooling effect, cooling for heat generated inside the secondary battery 100 may be performed.

When the secondary battery 100 is manufactured using the case sheet 1 in which the recessed portion 2 is formed and prepared in advance, electrode assemblies 60 of various sizes may be accommodated depending on the recessed depth of the recessed portion 2. In other words, when pre-forming the recessed portion 2 of the case sheet 1, the forming may be performed in consideration of the size of the electrode assembly 60 to be accommodated. In this case, when the recessed depth of the recessed portion 2 is pre-formed according to the size of the electrode assembly 60, the energy density of the secondary battery 100 may be effectively improved, and the numerical limitations of forming by pressing and heating in manufacturing the secondary battery or case may be improved.

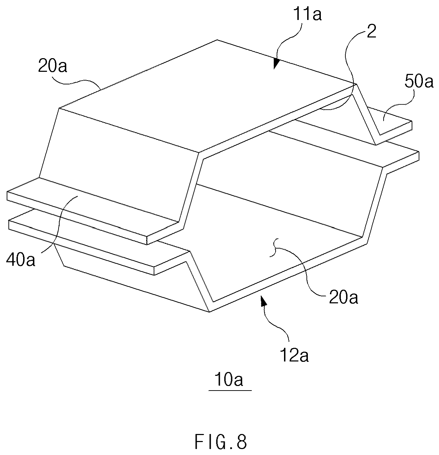

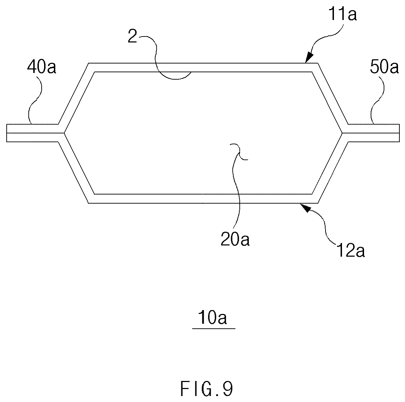

FIG. 8 is a perspective view showing a pouch-type case according to a second embodiment of the present disclosure, and FIG. 9 is a side view showing a pouch-type case according to a second embodiment of the present disclosure, as viewed from one direction. The description of the above-described embodiment may be equally or similarly applied to this embodiment.

The case 10a may include a pair of case units 11a, 12a. For example, a first case unit 11a and a second case unit 12a may be overlapped to face each other, so that the openings 20a may be formed on both sides. In this case, the first case unit 11a and the second case unit 12a may be distinct case units that are not connected through a connection portion (e.g., connection portion 30).

The electrode assembly 60a may be inserted through one of the openings 20a formed on both sides of the case 10a.

The sealing member 80a may be provided in plurality to cover a plurality of openings 20a. For example, the sealing member 80a may cover the openings 20a formed on both sides of the case 10a.

The openings 20a formed on both sides of the case 10a may each have a polygonal shape.

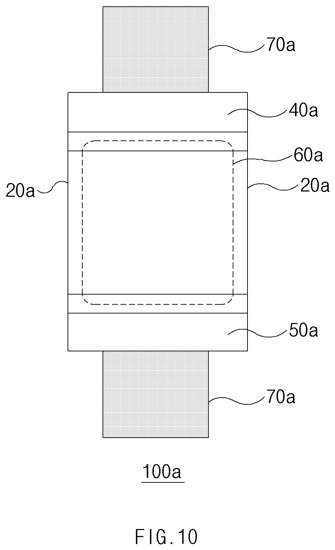

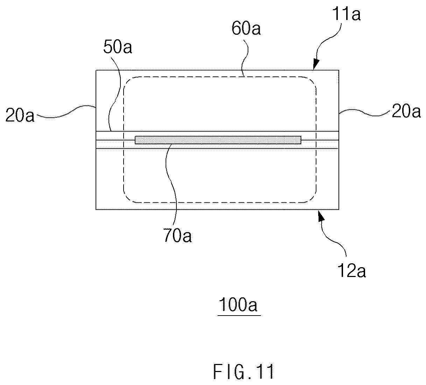

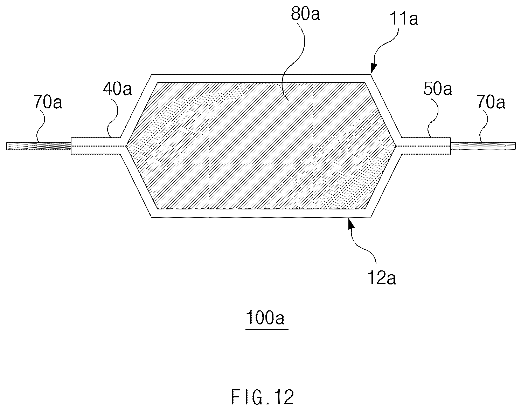

FIG. 10 is a plan view showing a secondary battery according to a second embodiment of the present disclosure, FIG. 11 is a side view showing a secondary battery according to a second embodiment of the present disclosure, as viewed from another direction, and FIG. 12 is a side view showing a secondary battery sealed with a sealing member according to a second embodiment of the present disclosure, as viewed from one direction. The description of the above-described embodiment may be equally or similarly applied to this embodiment.

The secondary battery 100a may include a pouch-type case 10a having an opening 20a between a pair of case units 11a, 12a, an electrode assembly 60a inserted into the case 10a through the opening 20a, and a sealing member 80a provided to cover the opening 20a and seal the case 10a.

The openings 20a may be formed on both sides of the case 10a. The sealing member 80a may be provided in plurality to cover the plurality of openings 20a and may be inserted into the openings 20a.

According to the above, while effectively improving the energy density of the secondary battery 100, it is possible to improve the numerical limitations of forming by pressing and heating in manufacturing the secondary battery or case.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Case sheet
2: Recessed portion
10, 10a: Pouch-type case
11, 11a: First case unit
12, 12a: Second case unit
20, 20a: Opening
30, 30a: Connection portion
40, 40a: First sealing portion
50, 50a: Second sealing portion
60, 60a: Electrode assembly
70, 70a: Electrode lead
80, 80a: Sealing member
100, 100a: Secondary battery

## Claims

1. A secondary battery comprising:
a pouch-type case having an opening between a pair of case units;
an electrode assembly inserted into the case through the opening; and
a sealing member provided to cover the opening and seal the case.

2. The secondary battery according to claim 1, wherein a recessed portion recessed to a predetermined depth is provided in at least one of the pair of case units.

3. The secondary battery according to claim 2, wherein the case comprises:
the pair of case units facing each other; and
a connection portion that is folded to connect the pair of case units.

4. The secondary battery according to claim 1, wherein the pair of case units are overlapped to face each other, so that the openings are formed on opposite sides.

5. The secondary battery according to claim 4, wherein the sealing member is provided in plurality to cover a plurality of openings.

6. The secondary battery according to claim 1, wherein the opening has a polygonal shape.

7. The secondary battery according to claim 1, wherein the sealing member comprises a metal member having a cooling effect.

8. The secondary battery according to claim 7, wherein the shape of the metal member corresponds to the shape of the opening.

9. The secondary battery according to claim 7, wherein the metal member is inserted into the opening.

10. A manufacturing method of the secondary battery comprising:
preparing a case sheet provided with a recessed portion recessed to a predetermined depth;
forming case units by cutting the case sheet; and
forming a secondary battery having an electrode assembly embedded therein using the case units.

11. The manufacturing method of the secondary battery according to claim 10, wherein the forming the secondary battery comprises:
disposing the case units to be overlapped so that an opening is formed; and
inserting the electrode assembly between the case units through the opening.

12. The manufacturing method of the secondary battery according to claim 11, wherein the forming the secondary battery further comprises:
sealing the opening using a sealing member.
